(19) Europäisches Patentamt
European Patent Office
Office européen des brevets

(11) Veröffentlichungsnummer: **0 046 928**
**B1**

(12) # EUROPÄISCHE PATENTSCHRIFT

(45) Veröffentlichungstag der Patentschrift: **08.06.83**

(51) Int. Cl.³: **C 07 F 9/165,** A 01 N 57/10

(21) Anmeldenummer: **81106447.6**

(22) Anmeldetag: **19.08.81**

(54) **Neue Organophosphate, Verfahren zu ihrer Herstellung und ihre Verwendung in Schädlingsbekämpfungsmitteln.**

(30) Priorität: **01.09.80 JP 119854/80**

(43) Veröffentlichungstag der Anmeldung: **10.03.82 Patentblatt 82/10**

(45) Bekanntmachung des Hinweises auf die Patenterteilung: **08.06.83 Patentblatt 83/23**

(84) Benannte Vertragsstaaten: **BE CH DE FR GB IT LI NL**

(56) Entgegenhaltungen:
**DE-A-2 628 410**
**GB-A-948 783**
**JP-B-52 009 738**

**Die Akte enthält technische Angaben, die nach dem Eingang der Anmeldung eingereicht wurden und die nicht in dieser Patentschrift enthalten sind.**

(73) Patentinhaber: **NIHON TOKUSHU NOYAKU SEIZO K.K., No.8, 2-chome, Nihonbashi Muromachi, Chuo-Ku, Tokyo (JP)**

(72) Erfinder: **Saito, Junichi, 3-7-12, Osawa, Mitaka-shi Tokyo (JP)**
Erfinder: **Kudamatsu, Akio, 177, Kariyado Nakahara-ku, Kawasaki-shi Kanagawa-ken (JP)**
Erfinder: **Shiokawa, Kozo, 210-6, Shukugawa Tama-ku, Kawasaki-shi Kanagawa-ken (JP)**
Erfinder: **Tsuboi, Shinichi, 3-26-1, Hirayama, Hino-shi Tokyo (JP)**

(74) Vertreter: **Gremm, Joachim, Dr. et al, Bayer AG c/o Zentralbereich Patente, Marken und Lizenzen, D-5090 Leverkusen 1, Bayerwerk (DE)**

EP 0 046 928 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Neue Organophosphate, Verfahren zu ihrer Herstellung und ihre Verwendung in Schädlingsbekämpfungsmitteln

Die vorliegende Erfindung betrifft bestimmte neue Organophosphate, ein Verfahren zu ihrer Herstellung sowie ihre Verwendung als Schädlingsbekämpfungsmittel, insbesondere als Insektizide, Akarizide und Nematozide.

In der bekanntgemachten japanischen Patentanmeldung Nr. 9738/77 wurde bereits offenbart, dass eine Verbindung der allgemeinen Formel

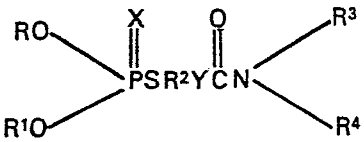

(IV)

worin
R und $R^1$ jeweils eine niedere Alkyl-Gruppe oder eine Cyclohexyl-Gruppe,
$R^2$ eine lineare oder verzweigte niedere Alkylengruppe mit mindestens 2 Kohlenstoff-Atomen,
$R^3$ eine niedere Alkyl-Gruppe,
$R^4$ ein Wasserstoff-Atom oder eine niedere Alkylgruppe und
X und Y jeweils ein Sauerstoff- oder Schwefel-Atom bezeichnen,
insektizide, akarizide und fungizide Aktivität besitzt und in Landwirtschaft und Gartenbau verwendet werden kann.

Gleichermassen ist aus der deutschen Offenlegungsschrift DE-OS 2628410 bekannt, dass eine Verbindung der allgemeinen Formel

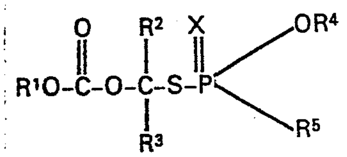

(V)

worin
$R^1$ eine Alkylgruppe mit 1 bis 6 Kohlenstoff-Atomen,
$R^2$ und $R^3$ jeweils ein Wasserstoff-Atom oder eine Alkyl-Gruppe mit 1 bis 3 Kohlenstoff-Atomen,
$R^4$ eine Alkyl-Gruppe mit 1 bis 6 Kohlenstoff-Atomen
$R^5$ eine Alkoxy-Gruppe mit 1 bis 6 Kohlenstoff-Atomen, eine Alkylthio-Gruppe, eine Alkenylthio-Gruppe, eine Alkinylthio-Gruppe, eine Alkoxyalkylthio-Gruppe, eine Alkylthioalkylthio-Gruppe, eine Benzylthio-Gruppe, eine Alkylgruppe mit 1 bis 3 Kohlenstoff-Atomen, eine wahlweise substituierte Phenyl-Gruppe, eine Amino-Gruppe, eine Alkylamino- oder Dialkylamino-Gruppe mit 1 bis 5 Kohlenstoff-Atomen und
X ein Sauerstoff- oder Schwefel-Atom bezeichnen,
insektivzide, akarizide und nematozide Aktivität besitzt.

Weiterhin sind aus der GB-A-948783 bestimmte O,O-Dialkyl-S-2(carbamoyloxy)ethyl-phosphordithiolate mit insektiziden und akariziden Wirkungen bekannt.

Gegenstand der vorliegenden Erfindung sind nunmehr, als neue Verbindungen, Organophosphate der allgemeinen Formel

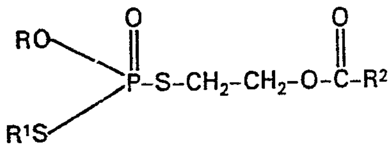

(I)

worin
R für eine Alkyl-Gruppe mit 1 bis 6 Kohlenstoff-Atomen,
$R^1$ für eine Alkyl-Gruppe mit 1 bis 6 Kohlenstoff-Atomen oder eine Alkoxyethyl-Gruppe mit 1 bis 6 Kohlenstoff-Atomen im Alkyl-Rest und
$R^2$ für eine Alkoxygruppe mit 1 bis 6 Kohlenstoff-Atomen, eine durch eine oder zwei Alkylgruppe(n) mit 1 bis 6 Kohlenstoff-Atomen mono- oder disubstituierte Amino-Gruppe, eine unsubstituierte Anilino-Gruppe oder eine durch eine Alkyl-Gruppe mit 1 bis 6 Kohlenstoff-Atomen in N-Stellung substituierte Anilino-Gruppe steht.

Gegenstand der vorliegenden Erfindung ist weiterhin ein Verfahren zur Herstellung von Organophosphaten der Formel (I) durch Reaktion von Verbindungen der allgemeinen Formel

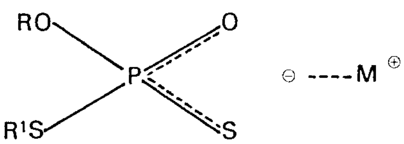

(II)

worin
R und $R^1$ für die vorstehend definierten Gruppen und
M für ein Alkalimetall-Atom oder die Ammonium-Gruppe steht,
mit Verbindungen der allgemeinen Formel

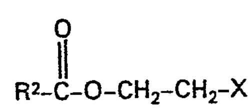

(III)

worin
$R^2$ für die vorstehend definierten Gruppen und
X für ein Halogen-Atom steht.

Die Organophosphate gemäss der vorliegenden Erfindung besitzen in hervorragender Weise vorzügliche biologische Aktivität und zeigen insbesondere ausgezeichnete insektizide, akarizide und nematozide Wirkung gegenüber einem breiten Spektrum von Schädlingen und auch resistenten Schädlingen. Die strukturell ähnlichsten Verbindungen nach dem Stand der Technik, nämlich Verbindungen der allgemeinen Formel (V) sowie Verbindungen aus der GB-A-948783, zeigen nicht die gleiche hohe biologische Aktivität wie die Verbindungen der vorliegenden Erfindung. Demgemäss verkörpern die Verbindungen der vorliegenden Erfindung einen sehr grossen

technischen Fortschritt, der nicht erwartet werden konnte.

Das Verfahren gemäss der vorliegenden Erfindung kann durch die folgende Gleichung wiedergegeben werden:

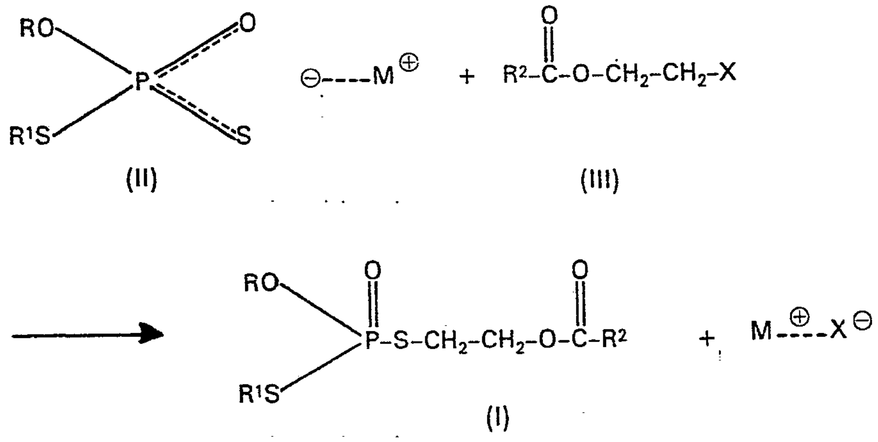

(II) (III)

(I)

(Darin entsprechen R, $R^1$, $R^2$, M und X den vorstehend gegebenen Definitionen.)

Bevorzugte Verbindungen der vorliegenden Erfindung und Zwischenprodukte zu ihrer Herstellung sind diejenigen, in denen R ein Alkyl-Radikal aus der Reihe Methyl-, Ethyl-, n- (oder iso-)Propyl-, n- (iso-, sec-, oder tert-)Butyl-, Amyl- und Hexyl-, $R^1$ eine unabhängig davon aus vorstehender Reihe ausgewählte Alkyl-Gruppe oder aber eine Alkoxyethyl-Gruppe mit unabhängig aus vorstehender Reihe gewähltem Alkyl-Rest und $R^2$ eine Alkoxy-Gruppe mit unabhängig aus vorstehender Reihe gewähltem Alkyl-Teil, eine durch ein oder zwei unabhängig aus vorstehender Reihe gewählte Alkyl-Gruppen mono- oder disubstituierte Amino-Gruppe, eine unsubstituierte Anilino-Gruppe oder eine durch eine aus vorstehender Reihe unabhängig ausgewählte Alkyl-Gruppe N-substituierte Anilino-Gruppe bezeichnet. Besonders bevorzugte Verbindungen der vorliegenden Erfindung sind diejenigen, in denen R für eine Ethyl-Gruppe und $R^1$ für eine Propyl-, sec-Butyl- oder 2-Ethoxyethyl-Gruppe steht.

Das Verfahren zur Herstellung der Verbindungen der vorliegenden Erfindung wurde weiter oben offenbart. Zu den Ausgangsmaterialien für das Verfahren gemäss der vorliegenden Erfindung zählen beispielsweise speziell Kalium-O-ethyl-S-propylphosphorodithioat, Kalium-O-ethyl-S-sec-butylphosphorodithioat, Kalium-O-ethyl-S-(2-ethoxyethyl)phosphorodithioat und deren entsprechende Natrium- und Ammonium-Salze.

Spezifische Beispiele für die Verbindung der allgemeinen Formel (III) zur Verwendung als Ausgangsmaterial bei dem Verfahren der vorliegenden Erfindung umfassen 2-Bromoethyl-methylcarbonat, 2-Bromoethyl-ethylcarbonat, 2-Bromoethyl-N-methylcarbamat, 2-Bromoethyl-N,N-dimethylcarbamat, 2-Bromoethyl-N,N-diethylcarbamat, 2-Bromoethyl-N-phenylcarbamat und 2-Bromoethyl-N-methyl-N-phenylcarbamat. Statt der Brom-substituierten Verbindungen kommen auch die entsprechenden Chlor-substituierten Verbindungen in Betracht.

Bei Verwendung von Kalium-O-ethyl-S-propylphosphorodithioat und 2-Bromoethyl-N,N-dimethylcarbamat als Ausgangsmaterialien wird das Verfahren der vorstehenden Erfindung durch die folgende Gleichung veranschaulicht:

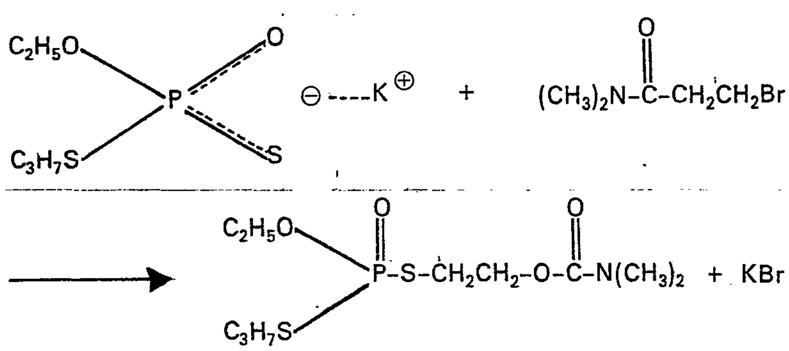

Das Verfahren gemäss der vorliegenden Erfindung wird vorzugsweise unter Verwendung eines Lösungs- oder Verdünnungsmittels durchgeführt. Zu diesem Zweck kann jedes inerte Lösungs- oder Verdünnungsmittel benutzt werden. Beispiele für derartige Lösungsmittel oder Verdünnungsmittel sind: Wasser; aliphatische, alicyclische und aromatische Kohlenwasserstoffe und chlorierte Kohlenwasserstoffe (wie z.B. Hexan, Cyclohexan, Petrolether, Ligroin, Benzol, Toluol,

Xylol, Methylenchlorid, Chloroform, Kohlenstofftetrachlorid, Ethylenchlorid, Trichlorethylen und Chlorbenzol); Ether (wie z.B. Diethylether, Methylethylether, Di-isopropylether, Dibutylether, Propylenoxid, Dioxan und Tetrahydrofuran); Ketone (wie z.B. Aceton, Methylethylketon, Methylisopropylketon und Methyl-isobutylketon); Nitrile (wie z.B. Acetonitril, Propionitril und Acrylnitril); Alkohole (wie z.B. Methanol, Ethanol, Isopropanol, Butanol und Ethylenglykol); Ester (wie z.B. Ethylacetat und Amylacetat); Säureamide (wie z.B. Dimethylformamid und Dimethylacetamid); Sulfone und Sulfoxide (wie z.B. Dimethylsulfoxid und Sulfolan); Basen (wie z.B. Pyridin).

Das Verfahren der vorliegenden Erfindung kann in einem weiten Temperaturbereich durchgeführt werden. Im allgemeinen wird es bei einer Temperatur zwischen –20°C und der Siedetemperatur des Reaktionsgemischs durchgeführt, vorzugsweise zwischen 0° und 100°C. Die Reaktion wird bevorzugt unter atmosphärischem Druck durchgeführt, jedoch ist es auch möglich, unter erhöhtem oder vermindertem Druck zu arbeiten.

Die Verbindungen gemäss dieser Erfindung sind ausgezeichnet wirksam und zeigen sichere Bekämpfungswirkungen gegenüber Schädlingen, insbesondere gegen Insekten, Milben und Nematoden, dabei jedoch keine Phytotoxizität gegenüber Nutzpflanzen. Die Verbindungen gemäss der Erfindung können zur Bekämpfung eines breiten Schädlings-Spektrums eingesetzt werden, insbesondere gegen saugende Insekten, beissende Insekten und andere parasitische Pflanzen-Schädlinge, Getreide-Schädlinge und solche Schädlinge, die für den Menschen gesundheitsgefährdend sind, und zu deren Ausrottung. Zu den vorerwähnten Schädlingen gehören

aus der Ordnung Coleptera z.B. Lissorhoptrus oryzophilus, Collosobruchus chinensis, Sitophilus zeamais, Tribolium castaneum, Epilachna vigintiocsomaculata, Agriotes fuscicollis, Anomala rufocuprea, Leptinotorsa decemlineata, Diabrotica spp., Monochamus altarnatus und Lyctus brunneus;

aus der Ordnung Lepidoptera z.B. Lymantria dispar, Malacosoma neustria, Pieris rapae, Spodoptera litura, Mamestra brassicae, Chilo suppressalis, Phrausta nubilalis, Ephestia cautella, Adoxophyes orana, Carpocapsa pomonella, Galleria mellonella und Phyllocnistis citrella;

aus der Ordnung Hemiptera z.B. Nephotettix cincticeps, Nilaparvata lugens, Pseudococcus comstocki, Unaspis yanonensis, Myzus persicae, Aphis pomi, Rhopalosiphum pseudobrassicae, Stephanitis nashi, Nazara spp., Cimex lectularius, Trialourodes vaporariorum und Psylla spp.;

aus der Ordnung Orthoptera z.B. Blatella germanica, Periplaneta americana, Gryllotalpa africana und Locusta migratoria migratoriodes;

aus der Ordnung Isoptera z.B. Leucothermes speratus und Coptotermes formosanus;

aus der Ordnung Diptera z.B. Musca domestica, Aedes aegypti, Hylemyia platura, Culex pipiens, Anophetes sinensis und Culex tritaeniorhynchus;

aus der Ordnung Acarina z.B. Tetranychus telarius, Panonychus citri, Aculus pelekassi und Torronomus spp.

Zu den pflanzenparasitischen Nematoden gehören Meloidogyne incognita, Aphelenchoides besseyi, Heterodera glycines, Pratylenchus spp.

Auf dem Gebiet der Veterinärmedizin werden die neuen Verbindungen gemäss dieser Erfindung wirkungsvoll gegen verschiedene tierische Parasiten (Endoparasiten und Ektoparasiten) wie z.B. Zecken, Insekten und parasitische Würmer eingesetzt.

Beispiele für Zecken sind Oranithodores spp., Ixodes spp. und Boophilus spp.

Beispiele für Insekten sind Gastrophilus spp., Stomoxys spp., Trichodectes spp., Rhodnius spp. und Ctenocephalides canis.

Wenn die Verbindungen dieser Erfindung als insektizide, akarizide oder nematozide Mittel eingesetzt werden, können sie nach direkter Verdünnung mit Wasser verwendet werden, oder aber man formuliert sie nach verschiedenen Rezepturen unter Verwendung landwirtschaftlich unbedenklicher Hilfsstoffe, entsprechend den üblichen Verfahrensweisen bei der Herstellung von Agrochemikalien. Die verschiedenen Formulierungen können entweder als solche oder aber nach vorheriger Verdünnung mit Wasser auf die gewünschte Konzentration zur Anwendung gebracht werden.

Derartige Formulierungen können in bekannter Weise hergestellt werden, beispielsweise durch Vermischen der aktiven Verbindungen mit Streckmitteln, d.h. mit flüssigen, verflüssigten gasförmigen oder festen Verdünnungsmitteln oder Trägermaterialien, wahlweise auch unter Verwendung von oberflächenaktiven Stoffen, d.h. Emulgatoren und/oder Dispersionsmitteln und/oder Schaumbildnern. Im Falle der Verwendung von Wasser als Streckmittel können z.B. organische Lösungsmittel als Lösungsvermittler benutzt werden.

Geeignete flüssige Verdünnungsmittel oder Trägersubstanzen, insbesondere Lösungsmittel, sind vor allem aromatische Kohlenwasserstoffe wie Xylol, Toluol oder Alkylnaphthaline, chlorierte aromatische oder chlorierte aliphatische Kohlenwasserstoffe wie Chlorbenzole, Chlorethylene oder Methylenchlorid, aliphatische oder alicyclische Kohlenwasserstoffe wie Cyclohexan oder Paraffine, z.B. Mineralölfraktionen, Alkohole wie Butanol oder Glykol und auch deren Ether und Ester, Ketone wie Aceton, Methylethylketon, Methyl-isobutylketon oder Cyclohexanon, oder stark polare Lösungsmittel wie Dimethylformamid und Dimethylsulfoxid ebenso wie Wasser.

Unter verfüssigten gasförmigen Verdünnungsmitteln oder Trägern sind solche Flüssigkeiten zu verstehen, die bei normaler Temperatur und unter normalem Druck gasförmig vorlägen, zum Beispiel Aerosol-Treibgase wie halogenierte Kohlenwasserstoffe und auch Butan, Propan, Stickstoff und Kohlenstoffdioxid.

Als feste Trägermaterialien können gemahlene natürliche Mineralien wie Kaoline, Tone, Talk,

Kreide, Quarz, Attapulgit, Montmorillonit oder Diatomeenerde und gemahlene synthetische Minerale wie hoch-disperse Kieselsäure, Aluminiumoxid und Silikate verwendet werden. Als feste Trägermaterialien für Granalien können gebrochene und fraktionierte Natursteinmaterialien wie Calcit, Marmor, Bimsstein, Meerschaum (Sepiolith) und Dolomit ebenso wie synthetische Granalien aus anorganischen und organischen Mehlen und Granalien aus organischem Material wie Sägemehl, Kokosnuss-Schalen, Maiskolben und Tabakstengeln verwendet werden.

Als Emulgatoren und/oder Schaumbildner können nichtionische und anionische Emulgatoren verwendet werden, etwa Polyoxyethylen-Fettsäureester, Polyoxyethylen-Fettalkoholether wie z.B. Alkylaryl-polyglycol-ether, Alkylsulfonate, Alkylsulfate, Arylsulfonate wie auch Albumin-Hydrolyseprodukte. Zu den Dispersionsmitteln zählen beispielsweise Ligninsulfit-Ablaugen und Methylcellulose.

Bindemittel wie Carboxymethylcellulose und natürliche und synthetische Polymere in Form von Pulvern, Granalien oder Latices wie Gummiarabicum, Polyvinylalkohol und Polyvinylacetat können in den Formulierungen verwendet werden.

Möglich ist die Verwendung von Färbemitteln wie anorganischen Pigmenten, z.B. Eisenoxid, Titanoxid und Preussischblau, und organischen Farbstoffen wie Alizarin-Farbstoffen, Azofarbstoffen oder Metall-Phthalocyanin-Farbstoffen sowie die Verwendung von Spuren-Nährstoffen wie Salzen des Eisens, Mangans, Bors, Kupfers, Cobalts, Molybdäns und Zinks.

Die Formulierungen enthalten im allgemeinen von 0,1 bis 95 Gewichtsprozent der aktiven Verbindung, vorzugsweise von 0,5 bis 90 Gewichtsprozent.

Im tatsächlichen praktischen Gebrauch beträgt der angemessene Anteil der aktiven Verbindung in den vorerwähnten verschiedenen Zubereitungen und gebrauchsfertigen Präparaten im allgemeinen 0,0001 bis 20 Gewichtsprozent, vorzugsweise 0,005 bis 10 Gewichtsprozent.

Der Wirkstoffgehalt kann je nach Art der Formulierung, nach Anwendungsmethode, -zweck, -zeit und -ort und nach dem Stadium des Schädlingsbefalls durch insbesondere Insekten, Akariden und Nematoden variiert werden.

Falls darüber hinaus erforderlich können die Verbindungen gemäss der Erfindung in Kombination mit anderen Agrochemikalien, z.B. Insektiziden, Fungiziden, Akariziden, Nematoziden, Viroziden, Herbiciden, Wachstumsregulatoren oder Lockstoffen (wie Organophosphat-Verbindungen, Carbamat-Verbindungen, Dithio-(oder -thiol)carbamat-Verbindungen, Organochlorverbindungen, Dinitroverbindungen, Organoschwefelverbindungen oder Organometallverbindungen, Antibiotika, substituierte Diphenylether-Verbindungen, Harnstoff-Verbindungen und Triazin-Verbindungen) und/oder Düngemitteln angewandt werden.

Verschiedene Formulierungen oder gebrauchsfertige Präparate, die einen Wirkstoff gemäss der Erfindung enthalten, können mit Hilfe der bei der Anwendung von Agrochemikalien allgemein gebräuchlichen Methoden zum Einsatz gebracht werden wie durch Versprühen (z.B. Spritzen, Nebeln, Zerstäuben, Stäuben, Streuen von Granalien, Wasseroberflächenanwendung oder Giessen), Begasen, Bodenbehandlung (z.B. Vermischen, Streuen, Bedampfen oder Bewässern), Oberflächenbehandlung (z.B. Beschichten, Bändern, Aufstäuben oder Bedecken), Tauchen und Tränken. Sie können ebenfalls mit Hilfe des sogenannten ULV-Verfahrens (ultra-low-volume method) zum Einsatz gebracht werden, bei der der Wirkstoff in einer Konzentration von 100% vorliegen kann.

Die Dosierung der Wirksubstanz pro Einheitsfläche beträgt im allgemeinen in der Landwirtschaft etwa 0,03 bis 10 kg/ha, vorzugsweise 0,3 bis 6 kg/ha. In besonderen Fällen kann die Aufwandmenge jedoch den angegebenen Bereich überschreiten oder auch unter der unteren genannten Grenze bleiben, wie dies gelegentlich erforderlich ist.

Die Erfindung umfasst weiterhin pestizide Zusammensetzungen, die als Wirkstoff eine Verbindung gemäss der vorliegenden Erfindung im Gemisch mit einem festen oder einem aus verflüssigtem Gas bestehenden Verdünnungsmittel oder Träger oder im Gemisch mit einem flüssigen Verdünnungsmittel oder Träger enthält, der ein oberflächenaktives Mittel enthält.

Die Erfindung umfasst weiterhin ein Verfahren zur Schädlingsbekämpfung (insbesondere der Bekämpfung von Nematoden oder Arthropoden, vornehmlich von Insekten oder Akariden), das dadurch gekennzeichnet ist, dass man auf die Schädlinge oder ihren Lebensraum eine Verbindung gemäss der vorliegenden Erfindung allein oder in Form eines Präparats, das als Wirkstoff eine Verbindung gemäss vorliegender Erfindung im Gemisch mit einem Verdünnungsmittel oder Träger enthält, einwirken lässt.

Die Erfindung umfasst weiterhin ein Verfahren zur Befreiung oder zum Schutz der Haustiere von bzw. vor Parasiten, das dadurch gekennzeichnet ist, dass auf die erwähnten Haustiere eine Verbindung gemäss der Erfindung im Gemisch mit einem Verdünnungsmittel oder Träger angewandt wird.

Die Erfindung ist ferner auf Nutzpflanzen gerichtet, die gegen die nachteilige Einwirkung von Schädlingen geschützt sind, indem sie in Bereichen angebaut werden, in denen unmittelbar vor und/oder während der Zeit des Anbaus eine Verbindung gemäss der vorliegenden Erfindung allein oder im Gemisch mit einem Verdünnungsmittel oder Träger angewandt wurde bzw. wird.

Die Erfindung ist ferner auf Haustiere gerichtet, sofern sie von Parasiten befreit oder vor diesen geschützt werden, indem eine Verbindung gemäss der vorliegenden Erfindung in Mischung mit einem Träger oder Verdünnungsmittel auf vorerwähnte Haustiere angewandt wird.

Die Präparate gemäss der Erfindung und die pestizide Wirksamkeit der Verbindungen gemäss der Erfindung werden durch die folgenden Beispiele veranschaulicht, in denen der Begriff «Teile» Gewichtsteile bezeichnet.

In diesen Beispielen sind die Verbindungen gemäss der Erfindung jeweils durch die (in Klammer genannte) Nummer des entsprechenden Herstellungsbeispiels, das später in dieser Beschreibung folgt, gekennzeichnet.

Die bekannten Vergleichsverbindungen sind wie folgt gekennzeichnet:

IV - 1: 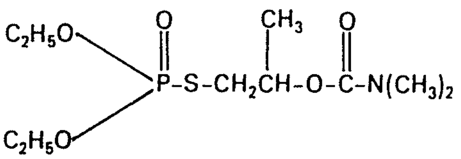

(eine Verbindung, die in der japanischen Auslegeschrift 9738/77 beschrieben ist);

V - 1: 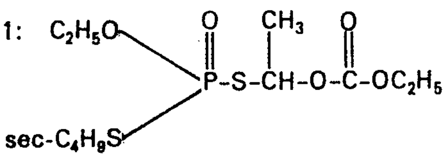

(eine Verbindung, die in DE-OS 2628410 beschrieben ist);

V - 2: 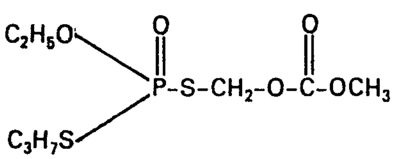

(eine Verbindung die ebenfalls in vorerwähnter DE-OS beschrieben ist).

Beispiel I

15 Teile der Verbindung (1), 80 Teile eines 1:5 Gemisches aus «Weissruss» (einem feinen, aus wasserhaltigem amorphen Siliciumoxid bestehenden Pulver) und Tonpulver, 2 Teile Natriumalkylbenzolsulfonat und 3 Teile eines Natriumalkylnaphthalinsulfonat-Formaldehyd-Kondensats wurden durch Pulverisieren und Mischen zu einem netzbaren Pulver verarbeitet. Dies netzbare Pulver wurde mit Wasser verdünnt und gelangte durch Spritzen zur Anwendung.

Beispiel II

(Emulgierbares Konzentrat)

30 Teile der Verbindung (2), 55 Teile Xylol, 8 Teile Polyoxyethylen-alkylphenylether und 7 Teile Calciumalkylbenzolsulfonat wurden unter Rühren zu einem emulgierbaren Konzentrat vermischt. Zum Spritzen wurde das Konzentrat mit Wasser verdünnt.

Beispiel III

2 Teile der Verbindung (3) und 98 Teile Tonpulver wurden zur Bildung eines Stäubemittels pulverisiert und gemischt. Es wurde durch Stäuben aufgebracht.

Beispiel IV

1,5 Teile der Verbindung (4), 0,5 Teile Isopropyl-hydrogenphosphat (PAP) und 98 Teile Tonpulver wurden zur Bildung eines Stäubemittels pulverisiert und gemischt. Es wurde durch Stäuben aufgebracht.

Beispiel V

25 Teile Wasser wurden zu einer Mischung aus 10 Teilen der Verbindung (5), 30 Teilen Bentonit (Montmorillonit), 58 Teilen Talkum und 2 Teilen Ligninsulfonat zugesetzt.

Das Gemisch wurde innig geknetet und mit einem Extruder-Granulator feinzerteilt, wobei Granulat der Korngrösse von 0,43 bis 2,0 mm (10 bis 40 mesh) erhalten wurde, das bei 40 bis 50°C getrocknet wurde. Das erhaltene Granulat wurde durch Streuen angewandt.

Beispiel VI

95 Teile Tonteilchen einer Körnung zwischen 0,2 und 2 mm wurden in einen Drehmischer gegeben. Während des Drehens wurden 5 Teile der Verbindung (6) (in öliger Form) so auf die Tonteilchen gesprüht, dass gleichmässige Absorption und Granulatbildung erfolgte. Das erhaltene Granulat wurde durch Streuen angewandt.

Beispiel VII

0,5 Teile der Verbindung (7) und 99,5 Teile Petroleum (Kerosin) wurden unter Rühren zu einem öligen Präparat vermischt, das durch Sprühen angewandt wurde.

Beispiel A

Test an Larven von Spodoptera litura

Herstellung einer Testverbindung

Lösungsmittel: 3 Gewichtsteile Xylol,

Emulgator: 1 Gewichtsteil Polyoxyethylenalkylphenylether.

Ein Gewichtsteil jeder wirksamen Verbindung wurde mit der vorstehenden Menge des Lösungsmittels, das die vorstehende Menge des Emulgators enthielt, vermischt. Zur Bildung eines geeigneten Präparats des Wirkstoffes wurde die Mischung mit Wasser auf eine vorbestimmte Konzentration verdünnt.

Prüfmethode

Süsskartoffel-Blätter wurden in eine wässrige Verdünnung des Wirkstoffes von vorher festgelegter Konzentration getaucht. Nach Lufttrocknung wurden die Blätter in Petrischalen von 9 cm Durchmesser gelegt. Dann wurden je 10 Larven im dritten Entwicklungsstadium (third instar) von Spodoptera litura in den Petrischalen ausgesetzt. Die Petrischalen wurden dann in einem Raum bei einer konstanten Temperatur von 28°C aufgestellt. Nach 24 Stunden wurde die Zahl der getöteten Larven festgestellt und die Vernichtungsrate berechnet. Die Ergebnisse sind in Tabelle A aufgeführt.

Tabelle A

| Verbindung Nr. | Konzentration des Wirkstoffes (in %) | Vernichtungsrate (in %) |
|---|---|---|
| (1) | 0,03 | 100 |
| (2) | 0,03 | 100 |
| (4) | 0,03 | 100 |
| (5) | 0,03 | 100 |
| (6) | 0,03 | 100 |
| (7) | 0,03 | 100 |
| (10) | 0,03 | 100 |
| (11) | 0,03 | 100 |
| Vergleichsverbindung | | |
| IV - 1 | 0,03 | 0 |
| V - 1 | 0,03 | 50 |
| V - 2 | 0,03 | 70 |

Beispiel B

Test an Callosobruchus chinensis

In einer Petrischale von 9 cm Durchmesser wurde ein Papierfilter ausgebreitet. 1 ml einer wässrigen Verdünnung von vorher festgelegter Konzentration eines Wirkstoffes wie sie analog zu Beispiel A hergestellt worden war, wurde in die Petrischale gegeben. 20 Individuen von Callosobruchus chinensis wurden in die Petrischale gesetzt und diese in einem Raum mit konstanter Temperatur von 28°C stehen gelassen. Nach 24 Stunden wurde die Zahl der getöteten Insekten festgestellt und die Vernichtungsrate berechnet. Die Ergebnisse sind in Tabelle B aufgeführt.

Tabelle B

| Verbindung Nr. | Konzentration des Wirkstoffes (in %) | Vernichtungsrate (in %) |
|---|---|---|
| (1) | 0,01 | 100 |
| (2) | 0,01 | 100 |
| (3) | 0,01 | 100 |
| (4) | 0,01 | 100 |
| (5) | 0,01 | 100 |
| (6) | 0,01 | 100 |
| (7) | 0,01 | 100 |
| (8) | 0,01 | 100 |
| (9) | 0,01 | 100 |
| (10) | 0,01 | 100 |
| (11) | 0,01 | 100 |
| Vergleichsverbindung | | |
| IV - 1 | 0,01 | 0 |
| V - 1 | 0,01 | 60 |
| V - 2 | 0,01 | 20 |

Beispiel C

Test an gegen phosphororganische Präparate resistenten Nephotettix cincticeps

Prüfmethode

Reispflanzen von jeweils etwa 10 cm Höhe wurden in Töpfe von jeweils 12 cm Durchmesser gepflanzt. Die Reispflanzen wurden mit jeweils 10 ml pro Topf einer wässrigen Verdünnung von vorher festgelegter Konzentration jedes der Wirkstoffe, die wie in Beispiel A hergestellt wurden, behandelt. Nach dem Trocknen wurde auf jeden Topf eine Drahtgeflechthaube von 7 cm Durchmesser und 14 cm Höhe gestülpt und darunter 30 vollentwickelte, gegen phosphororganische Wirkstoffe resistente Weibchen von Nephotettix ausgesetzt. Die Töpfe wurden dann in einem Raum mit konstanter Temperatur stehen gelassen. Nach 24 Stunden wurde die Zahl der toten Insekten festgestellt und die Vernichtungsrate berechnet. Die Ergebnisse sind in Tabelle C aufgeführt.

Tabelle C

| Verbindung Nr. | Konzentration des Wirkstoffes (in %) | Vernichtungsrate (in %) |
|---|---|---|
| (1) | 0,005 | 100 |
| (2) | 0,005 | 100 |
| (3) | 0,005 | 100 |
| (4) | 0,005 | 100 |
| (5) | 0,005 | 100 |
| (7) | 0,005 | 100 |
| (8) | 0,005 | 100 |
| (9) | 0,005 | 100 |
| (10) | 0,005 | 100 |
| (11) | 0,005 | 100 |
| Vergleichsverbindung | | |
| IV - 1 | 0,005 | 0 |
| V - 1 | 0,005 | 10 |
| V - 2 | 0,005 | 50 |

Beispiel D

Test an Tetranychus telarius (Sprühtest)

Prüfmethode

50 bis 100 ausgewachsene Exemplare von Tetranychus telarius wurden auf die Blätter von zweikeimblättrigen Feuerbohnen im Zweiblatt-Stadium gebracht, die in Töpfen von jeweils 6 cm Durchmesser kultiviert wurden. Zwei Tage später wurde jeder Topf mit 40 ml einer wässrigen Verdünnung von vorher festgelegter Konzentration jedes der Wirkstoffe, die wie in Beispiel A hergestellt wurden, besprüht. Dann wurden die Töpfe in ein Gewächshaus gestellt. Nach zehn Tagen wurde die Bekämpfungswirkung untersucht und nach folgendem Masstab bewertet:

3: 0% überlebende Exemplare,
2: mehr als 0% jedoch weniger als 5% überlebende Exemplare bezogen auf unbehandelte Exemplare,
1: 5 bis 50% überlebende Exemplare bezogen auf unbehandelte Exemplare,
0: mehr als 50% überlebende Exemplare bezogen auf unbehandelte Exemplare.

Die Ergebnisse sind in Tabelle D angeführt.

Tabelle D

| Verbindung Nr. | Konzentration des Wirkstoffes (in %) | Bewertung |
|---|---|---|
| (1) | 0,01 | 3 |
| (2) | 0,01 | 3 |
| (3) | 0,01 | 3 |
| (8) | 0,01 | 3 |
| (9) | 0,01 | 3 |
| (10) | 0,01 | 3 |
| (11) | 0,01 | 3 |
| Vergleichs-verbindung | | |
| IV - 1 | 0,03 | 0 |
| V - 1 | 0,01 | 0 |
| V - 2 | 0,01 | 1 |

Beispiel E
Test an Blatella germanica
Prüfmethode

Ein Papierfilter wurde in einer Petrischale von 9 cm Durchmesser ausgebreitet. 1 ml einer wässrigen Verdünnung von vorher festgelegter Konzentration jedes der Wirkstoffe, die wie in Beispiel A hergestellt wurden, wurde in die Schale gegeben. Dann wurden 10 Imagines von Blatella germanica in die Petrischale gesetzt und diese in einem Raum mit konstanter Temperatur von 28°C 24 Stunden stehen gelassen. Danach wurde die Zahl der getöteten Insekten festgestellt und die Vernichtungsrate berechnet. Die Ergebnisse sind in Tabelle E aufgeführt.

Tabelle E

| Verbindung Nr. | Konzentration des Wirkstoffes (in %) | Vernichtungs-rate (in %) |
|---|---|---|
| (1) | 0,05 | 100 |
| (2) | 0,05 | 100 |
| (3) | 0,05 | 100 |
| (4) | 0,05 | 100 |
| (5) | 0,05 | 100 |
| (6) | 0,05 | 100 |
| (7) | 0,05 | 100 |
| (8) | 0,05 | 100 |
| (9) | 0,05 | 100 |
| (10) | 0,05 | 100 |
| (11) | 0,05 | 100 |
| Vergleichs-verbindung | | |
| IV - 1 | 0,05 | 20 |
| V - 1 | 0,05 | 35 |
| V - 2 | 0,05 | 70 |

Beispiel F
Test an Larven von Culex tritaeniorhynchus
Prüfmethode

100 ml einer wässrigen Verdünnung von vorher festgelegter Konzentration jedes der Wirkstoffe, die wie in Beispiel A hergestellt wurden, wurden in jeweils eine hochwandige Petrischale von 9 cm Durchmesser gegeben. Je 25 Larven von Culex tritaeniorhynchus im vierten Entwicklungsstadium wurden in einer Schale ausgesetzt und die Petrischalen in einen Raum mit konstanter Temperatur von 27°C gestellt. Nach 24 Stunden wurde die Zahl der getöteten Insekten festgestellt und die Vernichtungsrate berechnet. Die Ergebnisse sind in Tabelle F angeführt.

Tabelle F

| Verbindung Nr. | Konzentration des Wirkstoffes (in %) | Vernichtungs-rate (in %) |
|---|---|---|
| (2) | 0,1 | 100 |
| (3) | 0,1 | 100 |
| (6) | 0,1 | 100 |
| (7) | 0,1 | 100 |
| (8) | 0,1 | 100 |
| (9) | 0,1 | 100 |
| (10) | 0,1 | 100 |
| (11) | 0,1 | 100 |
| Vergleichs-verbindung | | |
| IV - 1 | 0,1 | 0 |
| V - 1 | 0,1 | 20 |
| V - 2 | 0,1 | 55 |

Beispiel G
Test an Meloidogyne incognita
Herstellung einer Test-Chemikalie

Eine Test-Chemikalie wurde durch Pulverisieren und Mischen von jeweils 2 Teilen jedes Wirkstoffes und 98 Teilen Talkum hergestellt.

Prüfmethode

Der nach vorstehender Angabe formulierte Wirkstoff wurde zu durch Meloidogyne incognita verseuchtem Boden hinzugefügt, so dass seine Konzentration 10 ppm betrug. Er wurde durch Rühren gleichmässig untergemischt. Die Mischung wurde dann in Töpfe von jeweils 2 $dm^2$ Fläche gegeben. In diese wurden jeweils etwa 20 Samenkörner von Tomaten (Sorte: Kurihara) eingesät; die Anzucht erfolgte in einem Gewächshaus. Nach vier Wochen wurden die Tomatenpflanzen aus dem Boden gezogen, ohne dabei ihre Wurzeln zu beschädigen. Der Grad der Schädigung von jeweils 10 Wurzeln wurde nach dem nachstehenden Bewertungsmasstab beurteilt und danach ein Wurzelknoten-Index berechnet.

Grad der Schädigung
0: keine Wurzelknoten-Bildung (vollständige Bekämpfung),
1: geringfügige Wurzelknoten-Bildung,
2: erhebliche Wurzelknoten-Bildung,
3: stärkste Wurzelknoten-Bildung (entsprechend unbehandelten Pflanzen).

$$\text{Wurzelknoten-Index} = \frac{\Sigma\left[\begin{pmatrix}\text{Grad der}\\ \text{Schädigung}\end{pmatrix} \times \begin{pmatrix}\text{Zahl der}\\ \text{Wurzeln}\end{pmatrix}\right]}{\begin{pmatrix}\text{Gesamtzahl der}\\ \text{untersuchten Wurzeln}\end{pmatrix} \times 4} \times 100$$

Aus diesem Wurzelknoten-Index wurde die Bekämpfungswirkung wie folgt berechnet:

$$\text{Bekämpfungswirkung} = \frac{\begin{pmatrix}\text{Wurzelknoten-Index}\\ \text{d. unbehand. Parzelle}\end{pmatrix} - \begin{pmatrix}\text{Wurzelknoten-Index}\\ \text{d. behand. Parzelle}\end{pmatrix}}{\text{Wurzelknoten-Index der unbehandelten Parzelle}} \times 100$$

Eine Bekämpfungswirkung von 100% bedeutet eine vollständige Bekämpfung. Die Ergebnisse sind in Tabelle G aufgeführt.

Tabelle G

| Verbindung Nr. | Konzentration des Wirkstoffes (in ppm) | Bekämpfungs-wirkung (in %) |
|---|---|---|
| (1) | 10 | 100 |
| (4) | 10 | 100 |
| (5) | 10 | 100 |
| (6) | 10 | 100 |
| (7) | 10 | 100 |
| (9) | 10 | 100 |
| (11) | 10 | 100 |
| Vergleichs-verbindung IV - 1 | 10 | 15 |

Das Verfahren zur Herstellung der Verbindungen gemäss der Erfindung wird durch die folgenden Beispiele veranschaulicht.

Beispiel 1

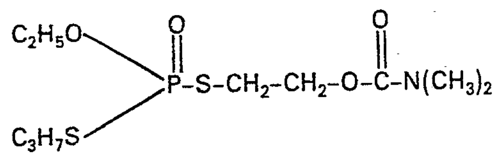 (1)

26,2 g Kalium-O-ethyl-S-propylphosphorodithioat wurden in 120 ml Methyl-ethylketon gelöst und 19,6 g 2-Bromethyl-N,N-dimethylcarbamat wurden dazugegeben. Die Lösung wurde 4 Stunden unter Rühren auf 70° bis 75°C erhitzt. Nach Beendigung der Reaktion wurde das Methyl-ethylketon unter vermindertem Druck abdestilliert und der Rückstand mit Toluol aufgenommen. Die Mischung wurde mit Wasser und einer 1-%igen wässrigen NaOH-Lösung gewaschen. Aus der Toluol-Schicht wurde Toluol abdestilliert, wonach 24,0 g des gewünschten O-Ethyl-S-2-(dimethylcarbamoyloxy)-ethyl-S-propylphosphorodithiolat als farbloses Öl mit dem Brechungsindex $n_D^{20}$ = 1,5042 erhalten wurden.

Die in Tabelle 8 aufgeführten Verbindungen gemäss der Erfindung wurden im wesentlichen nach demselben Verfahren wie vorstehend beschrieben synthetisiert.

Tabelle 8

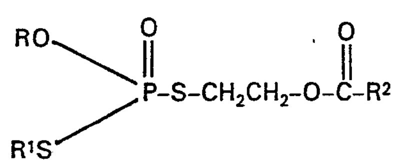

| Beispiel Nr. | R | $R^1$ | $R^2$ | Brechungsindex $n_D^{20}$ |
|---|---|---|---|---|
| 2 | $-C_2H_5$ | $-C_3H_7$ | $-OCH_3$ | 1,4994 |
| 3 | $-C_2H_5$ | $-C_3H_7$ | $-OC_2H_5$ | 1,4954 |
| 4 | $-C_2H_5$ | $-C_3H_7$ | $-NHCH_3$ | 1,5145 |
| 5 | $-C_2H_5$ | $-C_3H_7$ | $-N(C_2H_5)_2$ | 1,5008 |
| 6 | $-C_2H_5$ | $-C_3H_7$ | -NH 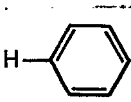 | 1,5591 |

Tabelle 8 (Fortsetzung)

| Beispiel Nr. | R | $R^1$ | $R^2$ | Brechungsindex $n_D^{20}$ |
|---|---|---|---|---|
| 7 | $-C_2H_5$ | $-C_3H_7$ | 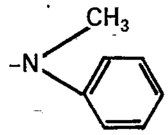 | 1,5450 |
| 8 | $-C_2H_5$ | sec-$C_4H_9$ | $-OCH_3$ | 1,4980 |
| 9 | $-C_2H_5$ | sec-$C_4H_9$ | $-N(C_2H_5)_2$ | 1,4993 |
| 10 | $-C_2H_5$ | $-CH_2CH_2-OC_2H_5$ | $-OCH_3$ | 1,5000 |
| 11 | $-C_2H_5$ | $-CH_2CH_2-OC_2H_5$ | $-N(C_2H_5)_2$ | 1,5005 |

**Patentansprüche**

1. Organophosphate der allgemeinen Formel

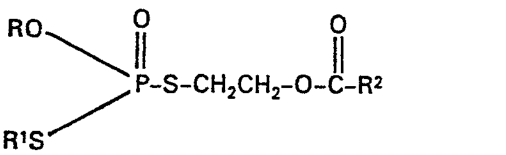

(1)

worin
R für eine Alkyl-Gruppe mit 1 bis 6 Kohlenstoff-Atomen,
$R^1$ für eine Alkyl-Gruppe mit 1 bis 6 Kohlenstoff-Atomen oder eine Alkoxyethyl-Gruppe mit 1 bis 6 Kohlenstoff-Atomen im Alkyl-Teil und
$R^2$ für eine Alkoxy-Gruppe mit 1 bis 6 Kohlenstoff-Atomen, eine durch ein oder zwei Alkyl-Gruppen mit 1 bis 6 Kohlenstoff-Atomen mono- oder disubstituierte Amino-Gruppe, eine unsubstituierte Anilino-Gruppe oder eine durch eine Alkyl-Gruppe mit 1 bis 6 Kohlenstoff-Atomen N-substituierte Anilino-Gruppe steht.

2. Verbindungen nach Anspruch 1, dadurch gekennzeichnet, dass R für eine Ethyl-Gruppe und $R^1$ für eine Propyl-, sec-Butyl- oder 2-Ethoxy-ethyl-Gruppe steht.

3. O-Ethyl-S-2-(methoxycarbonyloxy)ethyl-S-propylphosphorodithiolat der nachstehenden Formel

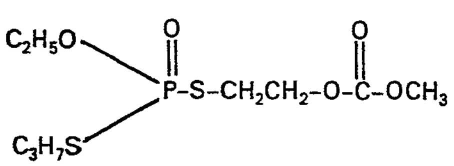

4. O-Ethyl-S-2-(dimethylcarbamoyloxy)ethyl-S-propylphosphorodithiolat der nachstehenden Formel

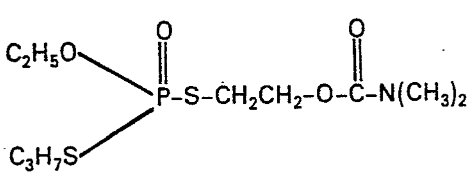

5. O-Ethyl-S-2(diethylcarbamoyloxy)ethyl-S-sec-butylphosphordithiolat der nachstehenden Formel

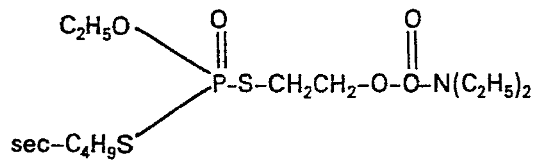

6. Verfahren zur Herstellung einer Verbindung nach Ansprüchen 1-5, dadurch gekennzeichnet, dass eine Verbindung der allgemeinen Formel

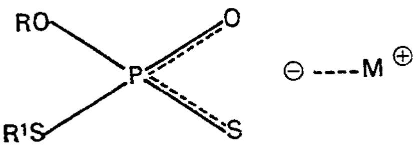

(II)

worin R und $R^1$ die in Anspruch 1 genannten Bedeutungen besitzen und M für ein Alkalimetall-Atom oder die Ammoniumgruppe steht, mit einer Verbindung der allgemeinen Formel

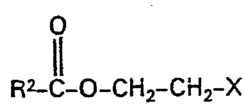

(III)

worin $R^2$ die in Anspruch 1 genannte Bedeutung hat und X für ein Halogenatom steht, gegebenenfalls in einem inerten Verdünnungs- oder Lösungsmittel und gegebenenfalls bei einer Temperatur zwischen -20°C und dem Siedepunkt der Reaktionsmischung, umgesetzt wird.

7. Pestizides Mittel, dadurch gekennzeichnet, dass es als Wirkstoff wenigstens eine der Verbindungen nach Anspruch 1 bis 5 im Gemisch mit einem festen oder einem verflüssigten gasförmigen Verdünnungsmittel oder Träger oder im Gemisch mit einem flüssigen Verdünnungsmittel oder Trägermaterial, dem ein oberflächenaktives Mittel zugesetzt wurde, enthält.

8. Verfahren zur Schädlingsbekämpfung, dadurch gekennzeichnet, dass man auf die Schädlinge oder ihren Lebensraum eine Verbindung nach Anspruch 1 bis 5 oder ein Mittel nach Anspruch 7 einwirken lässt.

9. Verwendung der Verbindungen nach Ansprüchen 1 bis 5 zur Schädlingsbekämpfung.

## Claims

1. Organophosphates of the general formula

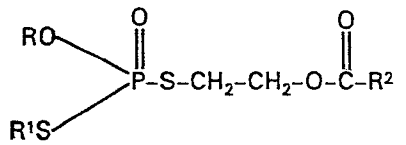 (I)

wherein
R represents an alkyl group with 1 to 6 carbon atoms,
$R^1$ represents an alkyl group with 1 to 6 carbon atoms or an alkoxyethyl group with 1 to 6 carbon atoms in the alkyl part and
$R^2$ represents an alkoxy group with 1 to 6 carbon atoms, an amino group mono- or disubstituted by one or two alkyl groups with 1 to 6 carbon atoms, an unsubstituted anilino group or an anilino group substituted at the N-position by an alkyl group with 1 to 6 carbon atoms.

2. Compounds according to Claim 1, characterised in that R represents an ethyl group and $R^1$ represents a propyl, sec-butyl or 2-ethoxyethyl group.

3. O-ethyl-S-2-(methoxycarbonyloxy)ethyl-S-propylphosphorodithiolate of the following formula

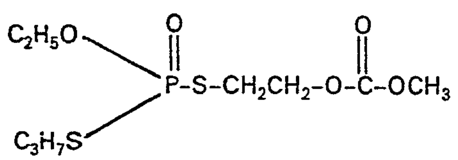

4. O-ethyl-S-2-(dimethylcarbamoyloxy)ethyl-S-propylphosphorodithiolate of the following formula

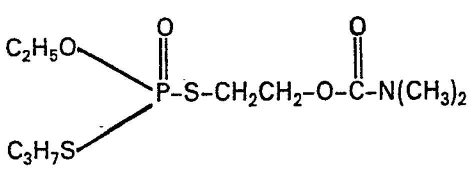

5. O-ethyl-S-2-(diethylcarbamoyloxy)ethyl-S-sec-butylphosphorodithiolate of the follwing formula

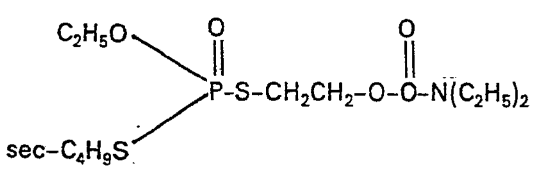

6. Process for the preparation of a compound according to Claims 1–5, characterised in that a compound of the general formula

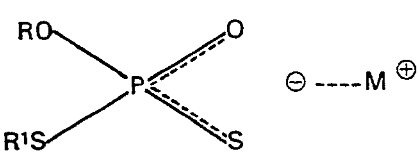 (II)

wherein
R and $R^1$ have the meanings indicated in Claim 1 and M represents an alkali metal atom or the ammonium group,
is reacted with a compound of the general formula

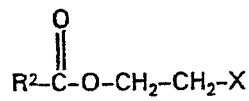 (III)

wherein
$R^2$ has the meaning indicated in Claim 1 and X represents a halogen atom,
if appropriate in an inert diluent or solvent and if appropriate at a temperature between -20°C and the boiling point of the reaction mixture.

7. Pesticidal composition, characterised in that it contains as active ingredient at least one of the compounds according to Claim 1 to 5 in admixture with a solid or a liquefied gaseous diluent or carrier or in admixture with a liquid diluent or carrier material to which a surface-active agent has been added.

8. Method of combating pests, characterised in that a compound according to Claim 1 to 5 or a composition according to Claim 7 is allowed to act on the pests or their environment.

9. Use of the compounds according to Claims 1 to 5 for combating pests.

## Revendications

1. Organophosphates de formule générale

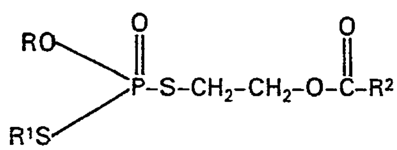 (I)

dans laquelle
R représente un groupe alkyle en $C_1$–$C_6$,
$R^1$ représente un groupe alkyle en $C_1$–$C_6$ ou un groupe alcoxyéthyle ayant 1 à 6 atomes de carbone dans le reste alkyle et
$R^2$ représente un groupe alcoxy en $C_1$–$C_6$, un groupe amino mono- ou disubstitué par 1 ou 2 groupes alkyle en $C_1$–$C_6$, un groupe anilino non substitué ou un groupe anilino substitué à l'azote par un groupe alkyle en $C_1$–$C_6$.

2. Composés selon la revendication 1, caractérisé en ce que R représente un groupe éthyle et $R^1$ représente un groupe sec-butyle ou 2-éthoxyéthyle.

3. Phosphorodithiolate de O-éthyle, S-2-(méthoxycarbonyloxy)éthyle et S-propyle de formule suivante

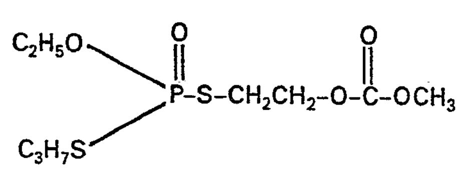

4. Phosphorodithiolate de O-éthyle, S-2-(diméthylcarbamoyloxy)éthyle et S-propyle de formule suivante

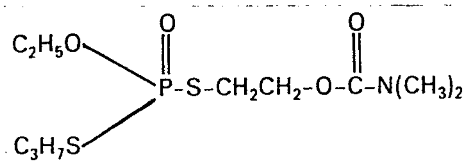

5. Phosphorodithiolate de O-éthyle, S-2(diéthylcarbamoyloxy)éthyle et S-sec-butyle de formule suivante

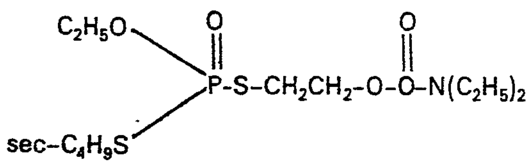

6. Procédé pour la fabrication d'un composé selon les revendications 1 à 5, caractérisé en ce qu'on fait réagir un composé de formule générale

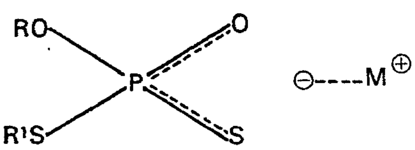 (II)

dans laquelle
R et $R^1$ ont les significations indiquées à la revendication 1 et
M représente un atome de métal alcalin ou le groupe ammonium, avec un composé de formule générale

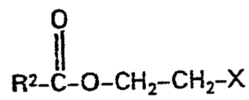 (III)

dans laquelle
$R^2$ a la signification indiquée à la revendication 1 et
X représente un atome d'halogène, éventuellement dans un diluant ou solvant inerte, à une température entre -20°C et le point d'ébullition du mélange de réaction.

7. Agent pesticide, caractérisé en ce qu'il contient comme produit actif au moins un des composés selon les revendications 1 à 6, en mélange avec un diluant ou support gazeux liquéfié ou en mélange avec un diluant ou support liquide, auquel on a ajouté un agent tensioactif.

8. Procédé pour la lutte contre les parasites, caractérisé en ce que l'on fait agir sur les parasites ou leur espace vital un composé selon les revendications 1 à 5 ou un agent selon la revendication 7.

9. Utilisation des composés selon les revendications 1 à 5 pour la lutte contre les parasites.